# EUROPÄISCHE PATENTANMELDUNG

(11) **EP 1 747 906 A2**
(43) Veröffentlichungstag der Anmeldung: **31.01.2007**
(21) Anmeldenummer: 06018489.2
(22) Anmeldetag: 16.04.2003
(51) Int. Cl.: B42D 15/00, B42D 15/10, G07D 7/02, G07D 7/04, G09F 9/37

(54) **Sicherheitsdokument**

(30) Priorität: 19.04.2002 DE 10217632
(62) Teilanmeldung aus: 03725047.9
(71) Anmelder: Giesecke & Devrient GmbH, 81677 München (DE)
(72) Erfinder: Schneider, Walter, 83714 Miesbach (DE)
(74) Vertreter: Klunker . Schmitt-Nilson . Hirsch

(57) **Zusammenfassung**

Beschrieben wird ein Sicherheitsdokument mit einem Sicherheitselement.

Das Sicherheitselement besteht zumindest teilweise aus einem Material, das durch ein elektrisches oder magnetisches Feld optisch veränderbar ist. Darüber hinaus werden ein entsprechendes Verfahren zur Erzeugung eines solchen Sicherheitsdokument sowie ein Prüfverfahren zur Prüfung eines solchen Sicherheitsdokuments beschrieben.

## Beschreibung

Die Erfindung betrifft ein Sicherheitsdokument mit einem Sicherheitselement, ein Verfahren zur Herstellung eines solchen Sicherheitsdokuments und ein Prüfverfahren zur Prüfung eines solchen Sicherheitsdokuments.

Der Einsatz von Sicherheitselementen zum Schutz von Sicherheitsdokumenten ist in den verschiedensten Ausführungsformen seit langem bekannt. Unter dem Begriff "Sicherheitsdokument" ist hierbei jedes Dokument zu verstehen, welches in irgendeiner Weise gegen unerlaubte Angriffe gesichert werden soll. Je nach Art des Dokuments bzw. der Information, die dieses Dokument trägt, können Dokumente gegen verschiedene Angriffe zu sichern sein.

Bestimmte Dokumente müssen in erster Linie gegen Fälschungen und/oder Verfälschungen gesichert werden. Zu diesen Dokumenten gehören beispielsweise Banknoten, Aktien, Wertpapiere, Ausweise, Urkunden, Zeugnisse, Schecks oder nahezu jede andere Art amtlicher Schriftstücke. Bei einigen dieser Dokumente, beispielsweise bei Banknoten und Wertpapieren, steht dabei die Sicherung gegen Fälschung im Vordergrund. Unter Fälschung ist dabei jede Imitation des Originals, ganz gleich mit welchen Mitteln diese erreicht wird, zu verstehen. Dagegen müssen beispielsweise Schecks und Zeugnisse in erster Linie gegen eine Verfälschung des Inhalts gesichert werden, da in der Regel diese Dokumente nicht vollständig gefälscht werden, sondern vornehmlich die Gefahr besteht, dass der Inhalt in betrügerischer Weise verändert wird, indem z. B. Unterschriften gefälscht werden und Namen oder Beträge ausgetauscht werden.

Typische Sicherheitselemente, die zur Vermeidung einer Fälschung in das Sicherheitspapier, auf dem das jeweilige Dokument gedruckt wird, oder in den Druck selbst eingebracht werden, sind beispielsweise Wasserzeichen, Sicherheitsfäden, Melierfasern, Hologramme oder andere spezielle Druckverfahren, die nur schwer nachahmbar sind. In der Regel werden die Sicherheitsdokumente, wie z. B. Banknoten, mit einer Vielzahl von verschiedenen Sicherheitselementen ausgerüstet, die teilweise mit dem bloßen Auge, teilweise in speziellen Prüfeinrichtungen durch Betrachten der Stücke in Auflicht, Durchlicht oder ultraviolettem Licht geprüft werden können.

Trotz der Vielzahl von bereits existierenden verschiedenen Sicherheitselementen besteht fortwährend ein Bedarf an neuen, einfach zu kontrollierenden, sicheren Nachweismitteln, mit denen die Echtheit eines Dokuments oder die Richtigkeit seiner Eintragung geprüft werden können.

Ein zweiter wesentlicher Sicherungspunkt ist die Absicherung gegen unerlaubte Kenntnisnahme und/ oder Vervielfältigung der auf dem Dokument beschriebenen Informationen durch Unbefugte. Entsprechende Maßnahmen sind beispielsweise bei geheimen Unterlagen von Entwicklungsabteilungen, bei militärischen Dokumenten, bei Protokollen geheim zu haltender Besprechungen, z.B. bei diplomatischen Diensten etc. notwendig. Insbesondere ist es seit der weiten Verbreitung von allgemein verfügbaren, in den meisten Büros ohnehin befindlichen Kopiergeräten sowie mit fortschreitender Technik im fotografischen Bereich ein Anliegen, die betreffenden Dokumente gegen ein unerlaubtes Fotokopieren oder Fotografieren zu sichern.

Auch in diesem Bereich gibt es bereits verschiedene bekannte Sicherheitselemente. In den ersten Jahren nach der Entwicklung des Fotokopierers wurden beispielsweise geheime Dokumente mit einer roten, transparenten Folie oder Beschichtung bedeckt, welche das früher meist grüne Licht der Schwarzweißkopiergeräte absorbierte und so eine Kopie unmöglich machte. Neben der Belästigung wegen der schwierigen Lesbarkeit derart abgesicherter Dokumente besteht der Nachteil, dass die Dokumente nur gegen grünes Licht gesichert sind. Fotografische Abbildungen oder ein Kopieren mit moderneren Kopiergeräten mit weißem Licht sind dennoch möglich. Bei anderen Methoden wird auf das Dokument eine geprägte, transparente Folie aufgebracht, welche wie eine Schar von Prismen arbeitet und die Richtung des Lichts ablenkt. Die Prismen können so ausgebildet werden, dass man senkrecht von oben nicht durch sie hindurch auf das Dokument sehen kann. Damit ist es sehr erschwert, eine Kopie anzufertigen. In neueren bekannten Verfahren werden fototrope Substanzen verwendet, um die Dokumente zu schützen. Dabei handelt es sich um chemische Verbindungen, deren Strukturen sich unter dem Einfluss des Lichts ändern. Sie nehmen dadurch eine andere Farbe an und können daher im Prinzip Dokumente gegen Kopieren sichern. Problematisch ist jedoch, dass solche fototropen Stoffe oft recht langsam reagieren, so dass die Kopie schneller erfolgt als das Umschalten der Stoffe. Ein anderes Problem ist, dass solche Stoffe nicht verhindern können, dass die Dokumente mit reduziertem Licht oder mit anderen Verfahren dennoch kopiert werden. Eine weitere Möglichkeit, unerlaubtes Kopieren zu verhindern, besteht darin, in die Kopiergeräte Einrichtungen einzubauen, welche Sicherheitsfäden, magnetische Merkmale oder andere Sicherungen im Papier des Originals erkennen und dann den Kopiervorgang sperren. Ein großer Nachteil solcher Methoden ist jedoch, dass dazu Einbauten in die Geräte erforderlich sind und dass diese Einbauten von halbwegs informierten Technikern leicht wieder ausgeschaltet werden können.

Auch im Bereich der Sicherung gegen unerlaubtes Lesen oder Kopieren von Sicherheitsdokumenten besteht daher noch ein erheblicher Bedarf nach neuen Sicherheitselementen.

Es ist Aufgabe der vorliegenden Erfindung, eine kostengünstige und einfache Alternative zu dem eingangs genannten Stand der Technik zu schaffen, welche je nach Art des Sicherheitsdokuments eine Absicherung gegen verschiedene Angriffsmöglichkeiten erlaubt.

Diese Aufgabe wird durch ein Sicherheitsdokument gemäß Patentanspruch 1 sowie durch ein Verfahren gemäß Patentanspruch 18 gelöst.

Die abhängigen Ansprüche enthalten jeweils vorteilhafte Ausgestaltungen und Weiterbildungen der Erfindung.

Erfindungsgemäß wird hierbei ein Sicherheitsdokument mit einem Sicherheitselement versehen, welches zumindest teilweise aus einem Material erzeugt ist, das durch ein elektrisches oder magnetisches Feld optisch veränderbar ist.

Durch die Verwendung eines Materials, dessen optische Eigenschaften durch ein elektrisches oder magnetisches Feld modifizierbar sind, kann das Sicherheitselement auf schnelle Weise von einem optischen Zustand in einen anderen optischen Zustand geschaltet werden. Dabei bestehen unterschiedliche konkrete Ausgestaltungsmöglichkeiten, um das Dokument gegen verschiedene Angriffe zu sichern. Dies wird im Folgenden noch anhand von Beispielen ausgeführt.

Vorzugsweise umfasst das optisch veränderbare Material eine Vielzahl von Teilchen, die mittels des elektrischen oder magnetischen Feldes in ihrer Lage und/ oder Ausrichtung veränderbar sind. Dies kann beispielsweise dadurch erreicht werden, indem die Teilchen in Mikrokapseln eingeschlossen werden, wobei die Mikrokapseln mittels eines Quellungsmittels in einen aufgequollenen Zustand gebracht werden, so dass die Teilchen in den Mikrokapseln beweglich gelagert sind.

Solche Materialien sind u. a. unter dem Stichwort "rotating balls" oder dem Markennamen Gyricon ® der Firma XEROX bekannt geworden. Diese Teilchen bestehen aus mindestens zwei Hälften, die verschieden gefärbt sind und gleichzeitig verschiedene elektrische Eigenschaften besitzen. Die Teilchen können z.B. auf einer Seite weiß und elektrisch negativ geladen sein, auf der anderen Seite schwarz und elektrisch positiv geladen sein. Es ist aber auch jede andere Kombination von elektrischer Polarität und Farbe möglich. Alle nach dem rotating ball-Prinzip arbeitenden Elemente können grundsätzlich auch in einem magnetischen Feld ausgerichtet werden, wenn die Teilchen eine magnetische Polarität besitzen. Diese Teilchen werden in einem geeigneten Bindemittel, beispielsweise in einem transparenten SilikonKautschuk, eingebettet. Aus dem Bindemittel können Folien hergestellt werden, welche die Teilchen enthalten. Anschließend wird eine das Polymer der Folie quellende Flüssigkeit, beispielsweise ein Öl oder ein hoch siedendes Lösemittel zugegeben. Die darauf folgende Quellung hat zur Folge, dass die Teilchen nun in einem Hohlraum, d.h. in ihrer eigenen Mikrokapsel frei liegen, die meist mit dem Quellungsmittel gefüllt ist. Alternativ ist es auch möglich, die Teilchen nicht direkt zu einer Folie zu formen, sondern einzelne Teilchen mit einer Hülle aus Polymer oder einem anderen Stoff zu versehen. Die Technologie hierzu entspricht derjenigen, die zur Herstellung von Mikrokapseln für selbstdurchschreibende Papiere verwendet wird. Wendet man das Quellungsmittel auf diese einzelnen Mikrokapseln an, so quellen auch diese und erlauben den darin enthaltenen Teilchen eine freie Beweglichkeit. Die in den Mikrokapseln eingeschlossenen Teilchen können dann wiederum mit einem Bindemittel auf eine Oberfläche aufgebracht werden.

Setzt man die in den Mikrokapseln frei beweglichen Teilchen einem elektrischen oder magnetischen Feld aus, so werden sich die Teilchen entsprechend der Feldlinien ausrichten. Dabei drehen sich die Teilchen und wenden bei geeigneter Feldrichtung der Teilchen eine ihrer Seiten dem Betrachter zu, so dass dieser beispielsweise bei einem schwarzweiß gefärbten Teilchen mit passender Polarität entweder nur die schwarze oder nur die weiße Seite sieht und somit die Oberfläche des Materials für ihn weiß oder schwarz erscheint. Anstelle einer kleinen Kugel können prinzipiell auch beliebige andere Teilchenformen, z. B. zylinderförmige Teilchen eingesetzt werden.

Ein besonderer Effekt lässt sich dadurch erreichen, dass Teilchen verwendet werden, welche zwei durchsichtige Hemisphären aufweisen, die durch eine undurchsichtige Schicht getrennt sind. Solche Teilchen können durch passende Ausrichtung des elektrischen oder magnetischen Feldes entweder in eine undurchsichtige Position gebracht werden, in der die undurchsichtige Trennschicht in den einzelnen Teilchen senkrecht zur Blickrichtung steht. Durch eine andere Anordnung des Feldes kann dafür gesorgt werden, dass sich die Teilchen um 90° gedreht ausrichten und somit die undurchsichtigen Trennschichten in den Teilchen jeweils parallel zur Sichtrichtung des Betrachters liegen. Damit wird eine mittels der Teilchen aufgebaute Materialschicht durchsichtig, da der Betrachter wie durch einen Lamellenvorhang, dessen Lamellen parallel zur Blickrichtung des Betrachters ausgerichtet sind, zwischen den Trennschichten der Teilchen hindurchsehen kann.

Bei einer alternativen Ausführungsform wird in einzelne Mikrokapseln eine Vielzahl gefärbter Teilchen nach Art eines Pulvers eingelagert, wobei zwei verschiedene Sorten von Pulver-Teilchen verwendet werden, die unterschiedliche Farben und unterschiedliche elektrische Ladungen aufweisen. Ein angelegtes elektrisches Feld sorgt dann dafür, dass sich die eine Teilchensorte in Feldrichtung und die andere Sorte entgegen der Feldrichtung bewegt. Befinden sich mehrere solcher Mikrokapseln in einer Materialschicht nebeneinander, kann durch entsprechendes Anlegen eines Feldes folglich - von einer bestimmten Blickrichtung aus gesehen - die Farbe der Materialschicht geändert werden. Hierbei kann je nach Anwendungsfall jede beliebige Kombination von Teilchenfarbe und elektrischer Polarität genutzt werden.

Die genannten optisch veränderbaren Materialien sind jeweils bistabil, d.h. die Teilchen bleiben in ihrer Lage und/ oder Ausrichtung, bis ein neues Feld angelegt wird, das sie anders ausrichtet bzw. ihre Lage verändert.

Eine Anwendung finden diese Materialien derzeit bei der Herstellung von so genanntem "elektronischem Papier". Hierbei werden aus dem Material nach dem vorbeschriebenen Verfahren dünne Folien gebildet. Es wird dann ein System von dünnen, elektrisch leitenden Bahnen auf die Folie aufgebracht, damit an einzelnen Punkten der Folie lokal ein elektrisches Feld angelegt werden kann. Auf diese Weise können die einzelnen Punkte der Folie adressiert werden. Die einzelnen elektrophoretischen Teilchen werden sich dann entsprechend dem Feld ausrichten und eine ihrer optischen Seiten nach oben kehren bzw. es wird innerhalb einer Mikrokapsel die entsprechende Teilchensorte nach oben zur einen Elektrode und die andere Teilchensorte nach unten zur anderen Elektrode wandern, so dass dort ein Punkt mit einer gewünschten Farbe entsteht. Auf diese Weise können sichtbare Zeichen auf der Folie hervorgerufen werden. In der Praxis werden diese Materialien bereits zur Herstellung von elektronischen Preisschildern an Regalen in Supermärkten benutzt.

Es hat sich herausgestellt, dass sich solche in Mikrokapseln befindliche "rotating ball"-Teilchen oder Farbpulvergemische besonders gut eignen, um neuartige und gut erkennbare Sicherheitselemente zu erzeugen. Dabei sind komplizierte Adressierungen oder andere zusätzliche umfangreiche Maßnahmen bei der Herstellung nicht erforderlich. Es genügt vielmehr, dass das optisch veränderbare Material mit den Teilchen in funktionsfähiger Form auf das Dokument aufgebracht wird. Daher kann ein Sicherheitsdokument in herkömmlichen Arbeitsgängen, wie sie in der Drucktechnik üblich sind, mit den neuartigen erfindungsgemäßen Sicherungselementen versehen werden.

Hierzu können die einzelnen Teilchen beispielsweise einfach als Pigmente einer "Druckfarbe" verwendet werden, d.h. es wird ein optisch veränderbares Material erzeugt, welches sich wie eine Druckfarbe verarbeiten lässt. Der Aufdruck des Materials auf das Dokument kann vollflächig erfolgen, um beispielsweise eine komplette Sicherheitsschicht aus dem Material zu erzeugen. Alternativ kann auch eine beliebige Information, d.h. beispielsweise ein Text, ein Symbol, ein Logo etc. mittels des Materials auf dem Dokument erzeugt werden. Als Trägermaterial kann hierfür das übliche für das jeweilige Dokument verwendete Papier genutzt werden. Das optisch veränderbare Material kann genau wie jede andere Druckfarbe im Siebdruckverfahren, im Tiefdruckverfahren, im Stichtiefdruck oder jedem anderen zweckmäßigen Verfahren aufgebracht werden.

Gemäß einem ersten bevorzugten Ausführungsbeispiel könnten dabei die Sicherheitsschicht und/ oder die Informationen mittels eines bereits aktivierten optisch veränderbaren Material auf dem Sicherheitsdokument erzeugt werden, d.h. es werden zum Druck der Informationen oder der Sicherheitsschicht bereits in Mikrokapseln eingehüllte Teilchen verwendet. Die Mikrokapseln enthalten dann schon das Quellungsmittel, in dem sich die Teilchen bewegen. Nach dem Druck und der Trocknung des Materials entsteht direkt ein funktionsfähiges Sicherheitsmerkmal.

Bei einem alternativen bevorzugten Ausführungsbeispiel wird die Sicherheitsschicht und/ oder die Information zunächst mittels eines nicht aktivierten, optisch veränderbaren Materials auf dem Sicherheitsdokument erzeugt und das Sicherheitsdokument wird anschließend mit einem Quellungsmittel zur Aktivierung des optisch veränderbaren Materials behandelt. D.h. es wird zunächst nur eine "Druckfarbe" verwendet, welche die Teilchen in ihren Mikrokapseln in nicht gequollener Form enthält. Nach dem Aufdruck und nach Trocknung des Aufdrucks sind die einzelnen Teilchen fest in der Druckfarbe in unbeweglicher Fixierung und zufälliger Ausrichtung gebunden. Es wird dann die quellende Flüssigkeit, z.B. ein Öl, eine Silikonölzubereitung, ein hoch siedendes Lösungsmittel oder eine andere geeignete Flüssigkeit, auf das Dokument aufgebracht. Dieses Quellungsmittel dringt in die Druckfarbe ein und bringt sie zum Quellen. Dadurch bilden sich um die Teilchen die Zwischenräume, in denen sie nun unbeweglich liegen. Das Sicherungselement ist dann funktionsfähig und kann durch elektrische oder magnetische Felder angeregt werden.

In einer weiteren bevorzugten Variante werden der Druckfarbe nicht nur die Teilchen in den Mikrokapseln beigemischt, sondern zusätzlich das Quellungsmittel in einer mikroverkapselten Form. Nach dem Trocknen des Materials auf dem Dokument kann dann beispielsweise durch einen mechanischen Druck eine Zerstörung der Mikrokapseln erreicht werden. Dadurch wird das Quellungsmittel frei und wirkt auf die Mikrokapseln der beweglichen Teilchen wie beschrieben ein. Mikroverkapselte Quellungsmittel wie hoch siedende Lösungsmittel sind aus der Produktion von selbstdurchschreibenden Papieren bekannt.

In gleicher Weise können die Mikrokapseln mit den beweglichen Teilchen - ggf. mit den Mikrokapseln mit dem Quellungsmittel - nicht nur in Druckfarbe eingebracht werden, sondern auch in Tinten oder anderen Färbungsmitteln, welche dann wie vorbeschrieben auf dem Dokument aufgebracht werden. Ebenso sind Realisierungen zur Herstellung von Inkjet-Tinten, Tonern für Kopierer, Laserdrucker etc. möglich.

Wie bereits erwähnt, ist es zur Absicherung eines Dokumentes mittels der erfindungsgemäßen Sicherheitselemente nicht notwendig, auf dem Dokument adressierende Leitungen anzulegen. Eine Prüfung kann erfolgen, indem das Sicherheitsdokument in ein externes elektrisches Feld eingebracht wird. Hat man beispielsweise ein Druckbild aus dem erfindungsgemäßen Material auf das Dokument aufgebracht, so kann dies einfach durch passendes Anlegen des elektrischen Feldes in eine von zwei Positionen geschaltet werden, so dass das aufgebrachte Zeichen in einer bestimmten Färbung sichtbar wird. Ändert man die Feldrichtung, so ändert sich auch die Farbe des Zeichens. Gleiches kann auch durch ein einfaches Umdrehen des Dokuments in dem Feld erreicht werden.

Entsprechende Prüfeinrichtungen mit elektrischen Feldern sind kostengünstig und einfach herstellbar. Die Verwendung des Sicherheitselements eignet sich somit insbesondere auch für Massen-Sicherheitsdokumente, wie Banknoten, da mittels eines kostengünstigen Geräts an jeder Einzahlungsstelle, wie z. B. Kaufhaus- oder Supermarktkassen, Tankstellen etc. eine Überprüfung des Sicherheitselements auf der Banknote möglich ist.

In einer zusätzlichen Variante kann ein gedrucktes Sicherheitselement auch durch ein zeitlich variierendes elektrisches oder magnetisches Feld beeinflusst werden. Dies führt dazu, dass beispielsweise eine gedruckte Information abwechselnd erscheint und wieder verschwindet oder sich in der Fläche bewegt. Auch hier ist es möglich, allein durch Bewegung des Dokuments im elektrischen Feld die Erscheinungsform des Zeichens zu verändern.

Bei einem weiteren bevorzugten Ausführungsbeispiel wird das Sicherheitsdokument mit einer zumindest teilweise elektrisch leitfähigen Schicht zum Anlegen eines elektrischen Feldes und/oder zum Abschirmen eines elektrischen Feldes ausgestattet. Hierbei sind Kombinationen von verschiedenen elektrisch leitfähigen Schichten möglich, wobei die elektrisch leitfähigen Schichten auch strukturiert sein können.

Bei einer besonders bevorzugten Variante sind zumindest zwei leitfähige Schichten über einen vorzugsweise mikroelektrischen Schaltkreis leitend verbunden. Dieser Schaltkreis umfasst vorzugsweise eine Umschalteinheit, welche so ausgebildet ist, dass sie nur nach Erhalt eines Sicherheitscodes, beispielsweise eines Passwortes, eine leitende Verbindung in einen nicht leitenden Zustand oder umgekehrt umschaltet.

Durch die Verwendung solcher elektrisch leitfähiger Schichten bzw. Kombinationen von verschalteten elektrischen leitfähigen Schichten wird eine weitere Vielzahl von Variationsmöglichkeiten bei der konkreten Ausgestaltung der Sicherheitselemente zur Verfügung gestellt.

Zusätzliche Variationen können auch dadurch erzielt werden, dass das Material so aufgebaut ist, dass es erst durch Einstrahlung von Licht in einen Zustand verbracht wird, in dem es mittels eines elektrischen Feldes optisch veränderbar ist. So können beispielsweise die Teilchen des optisch veränderbaren Materials durch Einstrahlung von Licht in den Zustand verbringbar sein, in dem sie mittels des elektrischen Feldes in ihrer Lage und/oder Ausrichtung veränderbar sind, d. h. es werden beispielsweise Teilchen verwendet, die erst bei Licht eine elektrische Polarität entwickeln. Hierzu bieten sich Teilchen an, die eine fotoelektrisch reagierende Seite besitzen. Solche Teilchen werden sich in einem elektrischen Feld erst dann ausrichten lassen, wenn gleichzeitig Licht auf die Oberfläche fällt.

Alternativ können die Teilchen des optisch veränderbaren Materials in eine Substanz eingebettet werden, die bei Einstrahlung von Licht ein elektrisches Feld erzeugt. So kann beispielsweise das Bindemittel mit fotoelektrischen Polymeren gemischt werden, welche bei einer Belichtung eine elektrische Ladung entwickeln. Ebenso kann auch eine weitere Schicht auf das Sicherheitsdokument aufgebracht werden, die bei Einstrahlung von Licht ein elektrisches Feld erzeugt.

Wenn das Sicherheitselement dazu dient, eine Fälschung oder Verfälschung des Dokuments zu verhindern, ist es sinnvoll, dass ein optisch veränderbares Material verwendet wird, welches durch organische Medien und/ oder Wasser lösbar ist. Eine Manipulation an dem Sicherheitsdokument mit Chemikalien und/oder Wasser führt dann zu einer Beschädigung des Sicherheitselements, so dass die Manipulation bei einer späteren Überprüfung auffällt.

Da die diversen Varianten von Schichten und/oder Informationen aus optisch veränderbarem Material, von elektrisch leitfähigen Schichten und von photoelektrischen Materialien in beliebigen Kombinationen miteinander genutzt werden können, gibt es eine nahezu unbeschränkte Anzahl von Variationen, ein konkretes Sicherheitselement nach dem erfindungsgemäßen Verfahren zu schaffen. Das Sicherheitselement kann daher bezüglich seiner Eigenschaften optimal an den jeweiligen Sicherungszweck angepasst werden.

Zur Erzeugung von fälschungssicheren Dokumenten bzw. nur schwer fälschbaren Dokumenten bieten sich insbesondere folgende Varianten an:

In einer Variante haben die im Normalzustand sichtbare Seite der "rotating ball"-Teilchen des erfindungsgemäßen Materials und die umgebende Druckfarbe oder eine Untergrundfarbe eine ähnliche oder sogar gleiche Färbung. Das Sicherheitselement wird dann nicht leicht bemerkt. Erst durch Anlegen des elektrischen Feldes kippen die Teilchen in ihren anderen Zustand, und das Sicherheitselement wird dann in eine andere - möglichst kontrastierende - Farbe geschaltet, so dass eine deutlich wahrnehmbare Änderung des Bildes erscheint. Dabei können durch passende Auswahl der jeweiligen Farben auf den beiden Hälften der Teilchen verschiedene Effekte erreicht werden. Werden z.B. ein fluoreszierender Stoff und ein nichtfluoreszierendes Material für die beiden Hälften eines Teilchens genutzt, so kann die gedruckte Information oder Schicht in einer ersten Orientierung nur im UV-Licht sichtbar sein, in einer zweiten Ausrichtung jedoch im normalen Licht sichtbar sein. Ebenso ergeben auch nur verschieden fluoreszierende bzw. nichtfluoreszierende Seiten eine interessante, nur unter UV-Licht erkennbare Wirkung. Die gleichen Effekte können durch entsprechende Farbpulverteilchen in einer Mikrokapsel erzeugt werden.

Verschiedene Variationen ergeben sich durch die Verwendung eines Materials, welches sich von einem durchsichtigen in einen undurchsichtigen Zustand umschalten lässt. Bei der Verwendung von Teilchen mit transparenten Hemisphären und einer undurchsichtigen Zwischenschicht kann beispielsweise die Zwischenschicht spiegelnd ausgestaltet sein, so dass in einer Ausrichtungsform eine spiegelnde Fläche entsteht und bei Anlegen eines elektrischen Feldes in einer anderen Richtung ein sich unter der Schicht befindliches Druckbild erscheint.

Interessante Varianten lassen sich auch dadurch erzeugen, dass eine wenig oder nichtstrukturierte Beschichtung aus dem optisch veränderbaren Material mit einem elektrisch leitfähigen, durchsichtigen Material oder mit einer leitfähigen Druckfarbe bedruckt wird, wobei diese elektrisch leitfähige Schicht strukturiert ist. Auf diese Weise wird erreicht, dass ein an sich nicht oder wenig strukturiertes, externes elektrisches Feld durch die leitende Überdruckung in seiner Wirkung modifiziert wird. Es können so im Feld Strukturen oder Zeichen gebildet werden, die in der Beschichtung mit dem optisch veränderbaren Material nicht angelegt sind. Weiterhin ist es auch möglich, solche Zeichen durch Verwendung von strukturierten Elektroden in den Prüfgeräten zu erzeugen. So könnte beispielsweise ein bestimmtes Zeichen auf eine Ebene eines Sicherheitsdokuments gedruckt werden und dieses Druckbild dann mit einer Sicherheitsschicht aus dem erfindungsgemäßen Material überdruckt werden, welches von einem undurchsichtigen in einen durchsichtigen Zustand umgeschaltet werden kann. Wird nun das Sicherheitsdokument später in eine Prüfeinrichtung gelegt, welche an genau einer Stelle ein strukturiertes elektrisches Feld erzeugt, so wird nur in diesem Bereich die Sicherheitsschicht von dem undurchsichtigen in den durchsichtigen Zustand umgeschaltet und es kann so eine Überdeckung der Elektrodenstrukturen mit dem unter der Sicherheitsschicht befindlichen Druckbild geprüft werden.

Bei einem Ausführungsbeispiel wird ein durchsichtiger, strukturierter, leitender Überdruck mit einer vollflächig leitenden Schicht auf der Rückseite des Dokuments verbunden. Ein externes Feld wird zwischen den Schichten kurzgeschlossen und es erscheint dort keine Veränderung eines Bildes, wogegen bei entsprechender Positionierung des optisch veränderbaren Materials ringsum ein anderer optischer Eindruck durch das elektrische Feld erreicht wird. Andere beliebige Realisierungen mit Hilfe von elektrisch leitfähigen Druckschichten sind ebenso möglich.

Besonders interessante Ausführungsformen ergeben sich, wenn man das erfindungsgemäße Verfahren mit anderen bekannten Sicherungsmitteln kombiniert. Beispielsweise bestehen holographische Elemente auf Banknoten häufig aus einem geprägten Kunstharz, welches mit metallischen Schichten hinterlegt ist. Solche Elemente können zusätzlich durch einen Aufdruck oder eine Umrahmung mit erfindungsgemäßen Schichten aufgewertet werden. Benutzt man Sicherheitsfäden, so können diese transparent oder auch metallisiert sein. Durch Aufdruck eines erfindungsgemäßen Materials mit hinreichend feinen Teilchen können auf den Sicherheitsfäden Zeichen aufgebracht werden, die je nach Ausrichtung des elektrischen Feldes sichtbar oder unsichtbar geschaltet werden können. Ebenso kann beispielsweise ein Sicherheitsfaden selbst durchscheinend oder opak geschaltet werden, wenn er aus dem optisch veränderbaren Material erzeugt wird.

Für die Absicherung gegen Inhaltsverfälschung eines Sicherheitsdokuments bietet sich insbesondere eine Variante an, bei der eine zu sichernde Information auf eine erfindungsgemäße Sicherheitsschicht aufgebracht wird. So kann z.B. in einem Teil der Oberfläche eines Schecks, vorzugsweise im Betragsfeld, oder bei Reiseschecks, im Bereich der ersten Unterschrift, die erfindungsgemäße Sicherheitsschicht aufgebracht sein. Die Farbe dieses Bereichs kann dabei von der Farbe des umgebenden Schecks verschieden sein. Vorzugsweise ist sie aber sehr ähnlich oder identisch, so dass die erfindungsgemäße Beschichtung nicht bemerkt wird. Die in diesem Bereich aufzubringende Information, d. h. die Unterschrift oder der Betrag, werden dann über die Sicherheitsschicht geschrieben oder gedruckt. Versucht nun ein Fälscher, ein im Original vorhandenes Zeichen durch Radieren zu entfernen, so wird er damit zugleich einen Teil der Sicherheitsbeschichtung entfernen. Wenn die Untergrundfarbe mit derjenigen der Sicherheitsschicht übereinstimmt oder die Sicherheitsschicht transparent ist, wird er dies gar nicht bemerken. Wird dann das Sicherheitsdokument zur Prüfung in ein elektrisches oder magnetisches Feld eingebracht, so fällt der radierte Teil jedoch sofort auf. Beispielsweise könnten die Teilchen in der Sicherheitsschicht von ihrer nichtsichtbaren in eine schwarze Form umschalten, so dass dann der radierte Teil sofort als helle Spuren in einer sonst schwarzen Umgebung erkennbar ist.

Bei Verwendung eines löslichen Bindemittels zur Erzeugung des erfindungsgemäßen Materials gilt das Gleiche auch bei Entfernen der Schrift mittels chemischer Verfahren. Es sind dann bei einer Prüfung in einem elektrischen Feld Wischspuren erkennbar, wobei in der Regel Anteile des erfindungsgemäßen Materials auch in den umgebenden Bereich auf dem Dokument verwischt worden sind.

Zum Schutz eines Sicherheitsdokuments mit geheimen Informationen gegen unbefugtes Lesen oder Kopieren sind besonders folgende Varianten sinnvoll:

In einer ersten Variante wird das zu schützende Dokument bzw. zumindest die Bereiche, welche die zu sichernden Informationen enthalten, mit einer Sicherheitsschicht bedeckt, welche sich durch das elektrische Feld von einem transparenten in einen undurchsichtigen Zustand umschalten lässt. Wird die Sicherheitsschicht durch Anlegen eines passenden Feldes in die opake Orientierung geschaltet, sind die Informationen auf dem Dokument nicht mehr sichtbar. Soll dann das Dokument verwendet werden, so muss es zunächst in einem elektrischen oder einem magnetischen Feld wieder in seinen sichtbaren Zustand geschaltet werden.

Bei einer zweiten Variante werden die Informationen auf dem Sicherheitsdokument direkt in einer aus dem optisch veränderbaren Material bestehenden Farbe bzw. einer Tinte oder einem Toner ausgeführt. Diese enthält als Pigmente die mittels eines elektrischen Feldes in ihrer Lage und/oder Ausrichtung veränderbaren Teilchen. Hierfür können beispielsweise die eingangs genannten schwarzweißen Teilchen verwendet werden. Wird auf diese Weise mit einer solchen Farbe, Tinte oder einem Toner ein Dokument auf weißem Untergrundpapier erstellt, so ist die Information in einem Zustand, in dem alle Teilchen so ausgerichtet sind, dass ihre weiße Seite vom Papier weg, d.h. nach oben gerichtet ist, nicht sichtbar. Wird das Dokument dagegen in ein passendes elektrischen Feld eingebracht, schalten die Teilchen um und die Information stellt sich in schwarz auf einem weißen Untergrund dar. Diese Ausführungsform bietet besondere Vorteile, wenn mehrfarbige Dokumente erstellt werden müssen. Diese können durch Verwendung von Tinten, Druckfarben oder Toner erstellt werden, welche jeweils unterschiedlich gefärbte Teilchen aufweisen. Die Umschaltung in den sichtbaren oder nichtsichtbaren Zustand kann dabei für alle Teilchen gleichzeitig vorgenommen werden.

Eine weitere, zusätzliche Sicherung lässt sich bei solchen Dokumenten erreichen, indem elektrisch leitende, durchsichtige Schichten verwendet werden, mit denen das Dokument jeweils abgedeckt wird. In das Trägermaterial kann ein mikroelektrischer Schaltkreis eingebracht sein, der die beiden Schichten miteinander verbindet. Legt man dann von außen ein elektrisches Feld an in der Absicht, das Dokument sichtbar zu machen, so wirkt das angelegte Feld aufgrund der über den Schaltkreis verbundenen Schichten nicht auf das erfindungsgemäße Material, welches sich im feldfreien Raum zwischen den elektrisch leitfähigen Schichten befindet. Daher ist es nicht möglich, das Sicherheitsdokument in seinen lesbaren Zustand zu schalten. Wird bei einem solchen ungeeigneten Versuch gleichzeitig der Schaltkreis beschädigt und in einen permanent leitenden Zustand gebracht, so kann das Dokument überhaupt nicht mehr gelesen werden.

Der Schaltkreis kann so ausgebildet sein, dass er zunächst durch einen Code bzw. ein Kennwort angesprochen werden muss und erst dann die leitende Verbindung beider Seiten unterbricht. Danach kann beispielsweise durch eine Kontaktierung der elektrisch leitfähigen Schichten mit einer Spannungsquelle über diese elektrisch leitfähigen Schichten ein passendes elektrisches Feld an das Dokument angelegt werden. Die Informationen werden dadurch wieder sichtbar geschaltet. Nach der Benutzung kann in gleicher Weise das Sicherheitsdokument durch Umpolen des Feldes in den unsichtbaren Zustand geschaltet und die leitende Verbindung zwischen den beiden elektrisch leitfähigen Schichten des Dokuments wieder herstellt werden.

Für einen Schutz gegen unbefugtes Kopieren bietet es sich auch an, zusätzliche Materialien einzusetzen, beispielsweise als Bindemittel in dem erfindungsgemäßen Material oder auch als zusätzliche Schichten, welche bei einer Bestrahlung mit Licht elektrische Felder aufbauen. Die elektrisch polarisierten Teilchen werden sich dann nach dem durch die fotoelektrische Ladung erzeugten Feld ausrichten. Bei geeigneter Ausführung der Polarität der Teilchen in dem optisch veränderbaren Material, der Farbgebung und der fotoelektrischen Eigenschaften des zusätzlichen Materials kann erreicht werden, dass bei Überschreitung einer maximal erlaubten Helligkeit das Material wunschgemäß in einen nichtsichtbaren Zustand umgeschaltet wird.

Die Erfindung wird im Folgenden unter Hinweis auf die beigefügten Figuren anhand von Ausführungsbeispielen detailliert erläutert. Es stellen dar:
- Figur 1: einen schematischen Teilquerschnitt durch ein erfindungsgemäßes Sicherheitsdokument gemäß einem ersten Ausführungsbeispiel vor Einbringung in ein elektrisches Feld,
- Figur 2: einen schematischen Teilquerschnitt durch ein erfindungsgemäßes Sicherheitsdokument nach dem ersten Ausführungsbeispiel, jedoch in einem elektrischen Feld,
- Figur 3: einen schematischen Teilquerschnitt durch ein Sicherheitsdokument gemäß einem zweiten Ausführungsbeispiel in einem ersten Zustand,
- Figur 4: das Sicherheitsdokument gemäß Figur 3 in einem zweiten Zustand,
- Figur 5: einen schematischen Teilquerschnitt durch ein Sicherheitsdokument gemäß einem dritten Ausführungsbeispiel,
- Figur 6: eine perspektivische Draufsicht auf ein Sicherheitsdokument gemäß einem vierten Ausführungsbeispiel in einem strukturierten elektrischen Prüffeld.

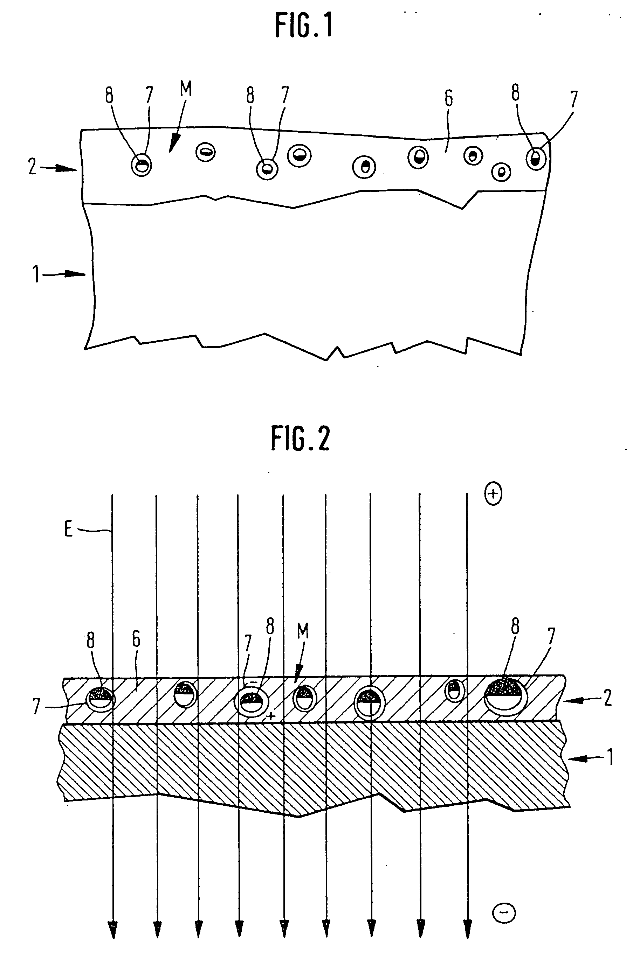

Figur 1 stellt die Oberfläche eines Sicherheitsdokuments 1 dar, auf der durch einen Druckvorgang eine Sicherheitsschicht 2 aus dem erfindungsgemäßen Material M erzeugt wurde. Dabei kann es sich beispielsweise um eine unstrukturierte Sicherheitsschicht 2 handeln, welche die Oberfläche des Sicherheitsdokuments 1 vollständig bedeckt.

Das Material M enthält hier in einem Bindemittel 6 eine Vielzahl von Mikrokapseln 7, in welchen jeweils einzelne Teilchen 8 in einem Quellungsmittel schwimmend frei beweglich sind. Diese "Pigmentteilchen' 8 sind elektrisch polar und weisen eine schwarze Seite und eine weiße Seite auf. Im Anfangszustand, ohne dass zuvor ein definiertes elektrisches Feld auf die Teilchen einwirkt, sind die Teilchen 8 statistisch ausgerichtet.

Figur 2 zeigt den Effekt, der auftritt, wenn dieses Sicherheitsdokument in ein elektrisches Feld E eingebracht wird. Es wird hier davon ausgegangen, dass die schwarze Hälfte der Teilchen 8 negativ und die weiße Hälfte positiv geladen ist. Die in den einzelnen Mikrokapseln 7 frei beweglich schwimmenden, elektrophoretischen Teilchen 8 werden sich dann entsprechend ihrer Polarität nach dem angelegten elektrischen Feld E ausrichten. In Figur 2 ist das Feld 8 so angelegt, dass die Teilchen 8 alle mit ihrer schwarzen Hälfte nach oben weisen, so dass das Material M, d.h. die Sicherheitsschicht 2 von oben gesehen insgesamt schwarz erscheint.

Es ist zu beachten, dass in den Figuren aus Gründen der Übersichtlichkeit nur vereinzelt Mikrokapseln 7 mit Teilchen in der Sicherheitsschicht 2 dargestellt sind. In der Realität sind die Teilchen 8 bzw. Mikrokapseln 7 relativ dicht innerhalb des Bindungsmittels 6 gepackt. Ebenso sind aus Gründen der besseren Darstellbarkeit die einzelnen Schichten nicht in den richtigen Grö-βenverhältnissen zueinander abgebildet.

Auf einem weißen Untergrund-Papier würde die Sicherheitsschicht 2 als vollflächige schwarze Einfärbung des Papiers klar erkennbar sein. Wird das elektrische Feld umgedreht, drehen sich die weißen Hälften der Teilchen 8 nach oben und die Sicherheitsschicht 2 wird nahezu unsichtbar. Wird anstelle einer vollflächigen Sicherheitsschicht 2 eine strukturierte Sicherheitsschicht bzw. eine Information mit dem erfindungsgemäßen Material M aufgedruckt, so kann mittels des elektrischen Feldes die Struktur bzw. Information zwischen einem sichtbaren und einem unsichtbaren Zustand hin- und hergeschaltet werden.

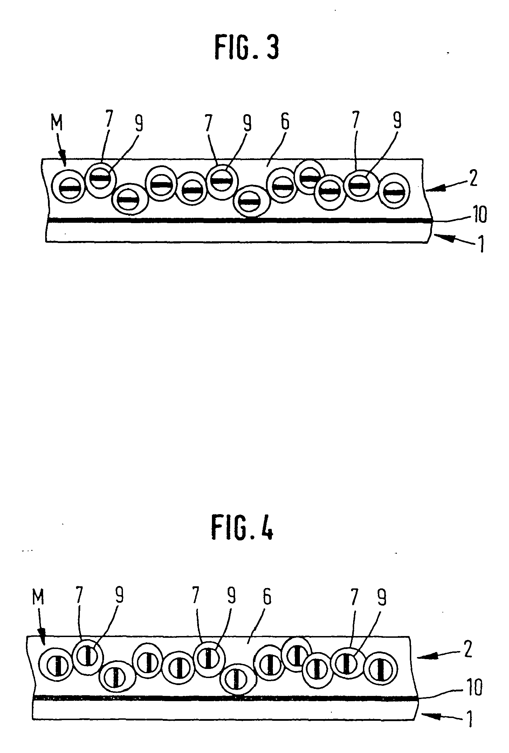

Die Figuren 3 und 4 zeigen eine weitere Variante. Der wesentliche Unterschied zu den Ausführungsbeispielen gemäß Figuren 1 und 2 besteht hier darin, dass die einzelnen Teilchen 9 jeweils zwei aus durchsichtigem Material bestehende Hälften aufweisen, die durch eine unsichtbare Mittelschicht voneinander getrennt sind. Bei der Ausrichtung gemäß Figur 3 ist somit die Sicherheitsschicht 2 undurchsichtig. Ein unter der Sicherheitsschicht 2 auf dem Dokument 1 aufgebrachter Aufdruck 10 mit einer bestimmten Information ist dann nicht sichtbar.

Figur 4 zeigt die Lage der Teilchen 8 bei einem um 90° gedrehten Feld. Hier stehen die undurchsichtigen Trennschichten innerhalb der Teilchen 8 senkrecht zur Oberfläche des Dokuments 1, so dass man von oben durch die Sicherheitsschicht 2 hindurch sehen kann und die Information in der Druckschicht 10 erkennbar wird.

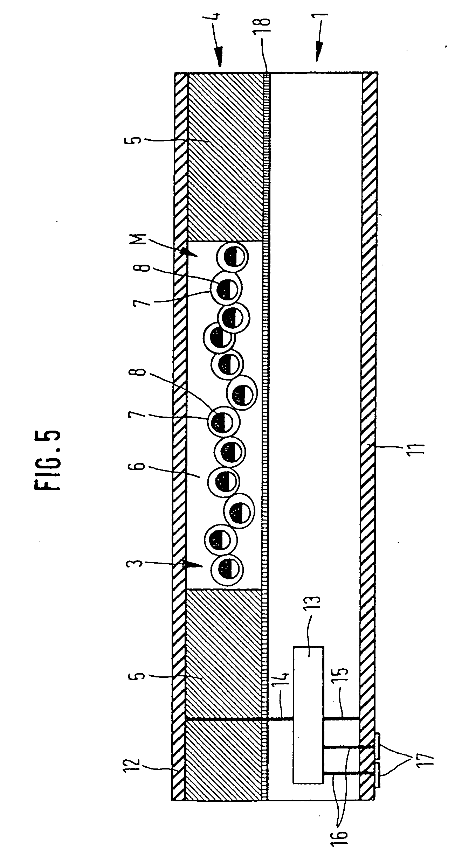

Bei dem Ausführungsbeispiel gemäß Figur 5 handelt es sich um eine etwas komplizierter aufgebaute Variante, bei der eine bestimmte Information mit dem erfindungsgemäßen, optisch veränderbaren Material M auf das Dokument 1 aufgebracht worden ist. Figur 5 zeigt hierbei einen Schnitt durch einen aufgedruckten Buchstaben in stark vergrößerter Darstellung.

Im Einzelnen ist hier auf das Basismaterial des Dokuments 1 eine Untergrundschicht 18, beispielsweise ein schwarzer oder dunkelgrauer Untergrund, aufgedruckt. Darüber befindet sich eine Schicht 4, welche zur Darstellung der Information 3 im Bereich der Buchstaben aus dem optisch veränderbaren Material M und in Randbereichen aus einem weiteren Material 5, beispielsweise eine herkömmliche Druckfarbe 5, erzeugt ist. Das Material M weist dabei wieder die in den Figuren 1 und 2 bereits dargestellten Teilchen 8 auf, die in Mikrokapseln 7 in einem Bindemittel 6 eingelagert sind. Diese Teilchen 8 bestehen hier aus einer weißen Hälfte und einer dunkel gefärbten Hälfte. Die dunkle Farbe 8 der Teilchen entspricht genau der Farbe des Farbmaterials 5, welches die Information 3 umgibt. Auch die Untergrundschicht 18 weist diese Farbe auf.

In dem in Figur 5 dargestellten Zustand wird daher ein Betrachter, der von oben auf das Dokument 1 schaut, die durch das Material M in dem Umgebungsmaterial 5 in der Schicht 4 aufgebrachten Informationen 3 nicht mehr erkennen können. Durch Anlegen eines passend elektrisch orientierten Feldes können die Teilchen 8 umgedreht werden, so dass die Information 3 in Weiß auf einem dunklen Hintergrund und in dunkler Umgebung erscheint.

Um zu verhindern, dass die Information 3 auf dem Sicherheitsdokument 1 durch Anlegen eines äußeren elektrischen Feldes beliebig sichtbar gemacht werden kann, ist das Sicherheitsdokument 1 auf beiden Seiten mit jeweils einer Schicht 11, 12 aus einem durchsichtigen leitfähigen Material, beispielsweise einem leitfähigen Polymer oder Ähnlichem, beschichtet. Die beiden Schichten 11, 12 sind über Leitungen 14,15 und einen mikroelektrischen Schaltkreis 13, welcher beispielsweise in dem Papier des Dokuments 1 untergebracht ist, kurzgeschlossen. Auf der Rückseite des Dokuments 1, d.h. auf der unteren elektrischen Schicht 11 befinden sich Kontaktflächen 17, welche ebenfalls über Leitung 16 mit dem Mikroschaltkreis 13 verbunden sind. Durch Eingabe eines elektronischen Codes über diese Kontakte 17 an den Mikroschaltkreis 13 kann der Kurzschluss zwischen den beiden elektrisch leitfähigen Schichten 11, 12 aufgehoben werden. Es ist dann möglich, an die beiden Schichten 11, 12 eine Spannung anzulegen und hierüber ein passendes elektrisches Feld zu erzeugen, wodurch die Teilchen 8 innerhalb des Materials M umgedreht werden und die Information 3 somit sichtbar wird. Durch Umpolen des elektrischen Feldes, d.h. durch Umkehren der Spannung an den beiden Schichten 11, 12 werden die Teilchen 8 wieder in den in Figur 5 dargestellten Zustand zurückgeschaltet. Durch eine Eingabe eines weiteren Codes kann dann dafür gesorgt werden, dass der Mikroschaltkreis 13 die beiden elektrisch leitfähigen Schichten wieder kurzschließt. Auf diese Weise wird wieder ein unbefugtes Lesbarmachen des Sicherheitsdokuments durch Anlegen von Spannung an die leitfähigen Schichten 11,12 verhindert, d. h. das Dokument 1 wird wieder gesichert.

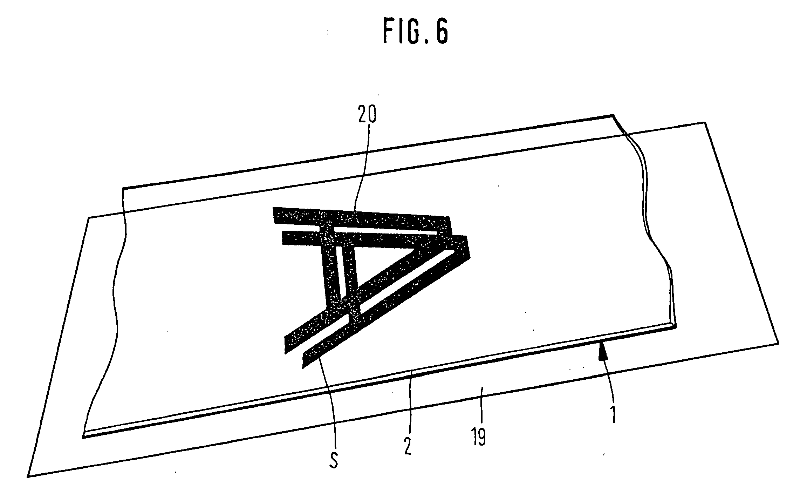

Figur 6 zeigt ein Ausführungsbeispiel, bei dem ein Sicherheitsdokument 1 mit einer großflächigen Sicherheitsschicht 2 beschichtet ist. In der Prüfeinrichtung wird hier ein äußeres strukturiertes Feld angelegt, in dem eine strukturierte metallische Elektrode 20 auf der Oberseite und eine vollflächige Gegenelektrode 19 auf der Unterseite verwendet werden. In der unstrukturierten Schicht 2 auf dem Sicherheitsdokument bildet sich dann genau die Struktur S der strukturierten Elektrode 20 ab.

Die in den Figuren beschriebenen Ausführungsbeispiele sind grundsätzlich auch für Teilchen mit magnetischer Polarität denkbar, die sich in einem magnetischen Feld ausrichten lassen.

bevorzugte Aspekte der Erfindung sind in den folgenden Absätzen angegeben:
1. Sicherheitsdokument (1) mit einem Sicherheitselement (2, 3), dadurch gekennzeichnet, dass das Sicherheitselement (2, 3) zumindest teilweise aus einem Material (M) besteht, das durch ein elektrisches Feld (E) oder ein magnetisches Feld optisch veränderbar ist.
2. Sicherheitsdokument nach Absatz 1, dadurch gekennzeichnet, dass das optisch veränderbare Material (M) eine Vielzahl von Teilchen (8, 9) umfasst, die mittels eines elektrischen Felds (E) oder eines magnetischen Feldes in ihrer Lage und/ oder Ausrichtung veränderbar sind.
3. Sicherheitsdokument nach Absatz 1 oder 2, dadurch gekennzeichnet, dass das Sicherheitselement (3) auf das Sicherheitsdokument (1) aufgebrachte Informationen (3) umfasst, die zumindest teilweise aus dem optisch veränderbaren Material (M) bestehen.
4. Sicherheitsdokument nach einem der Absätze 1 bis 3, dadurch gekennzeichnet, dass das Sicherheitselement (2) eine Sicherheitsschicht (2) umfasst, die zumindest teilweise aus dem optisch veränderbaren Material (M) besteht.
5. Sicherheitsdokument nach Absatz 4, dadurch gekennzeichnet, dass die Sicherheitsschicht eine Struktur aufweist.
6. Sicherheitsdokument nach einem der. Absätze 3 bis 5, dadurch gekennzeichnet, dass die Sicherheitsschicht (2) und/oder die optisch veränderbaren Informationen (3) in Abhängigkeit von einem elektrischen Feld (E) oder einem magnetischen Feld von einer bestimmten Ansichtsseite aus verschiedene Farben aufweisen.
7. Sicherheitsdokument nach einem der. Absätze. 3 bis 6, dadurch gekennzeichnet, dass die Sicherheitsschicht (2) und/ oder die optisch veränderbaren Informationen (3) in Abhängigkeit von einem elektrischen Feld (E) durchsichtig oder undurchsichtig sind.
8. Sicherheitsdokument nach einem der Absätze 4 bis 7, dadurch gekennzeichnet, dass eine zu sichernde Information auf einer Sicherheitsschicht aufgebracht ist.
9. Sicherheitsdokument nach einem der Absätze 4 bis 8, dadurch gekennzeichnet, dass eine Sicherheitsschicht (2) eine auf das Sicherheitsdokument (1) aufgebrachte Information (10) abdeckt.
10. Sicherheitsdokument nach einem der Absätze 1 bis 9, gekennzeichnet durch eine zumindest teilweise elektrisch leitfähige Schicht (11, 12) zum Anlegen und/oder zum Abschirmen eines elektrischen Feldes.
11. Sicherheitsdokument nach Absatz 10, dadurch gekennzeichnet, dass die elektrisch leitfähige Schicht eine Struktur aufweist.
12. Sicherheitsdokument nach Absatz 10 oder 11, dadurch gekennzeichnet, dass zumindest zwei leitfähige Schichten (11, 12) über einen Schaltkreis (13) leitend verbunden sind.
13. Sicherheitsdokument nach Absatz 11, dadurch gekennzeichnet, dass der Schaltkreis (13) eine Umschalteinheit umfasst, welche so ausgebildet ist, dass sie nur nach Erhalt eines Sicherheitscodes eine leitende Verbindung in einen nichtleitenden Zustand oder umgekehrt umschaltet.
14. Sicherheitsdokument nach einem der Absätze 1 bis 13, dadurch gekennzeichnet, dass das Material durch Einstrahlung von Licht in einen Zustand verbringbar ist, in dem es mittels eines elektrischen Felds optisch veränderbar ist.
15. Sicherheitsdokument nach einem der Absätze 2 bis 14, dadurch gekennzeichnet, dass die Teilchen des optisch veränderbaren Materials in einer Substanz eingebettet sind, die bei Einstrahlung von Licht ein elektrisches Feld erzeugt.
16. Sicherheitsdokument nach einem der Absätze 1 bis 15, gekennzeichnet durch eine Schicht, die bei Einstrahlung von Licht ein elektrisches Feld erzeugt.
17. Sicherheitsdokument nach einem der. Absätze 1 bis 16, dadurch gekennzeichnet, dass das optisch veränderbare Material durch organische Medien und/oder Wasser lösbar ist.
18. Verfahren zur Herstellung eines Sicherheitsdokuments (1) mit einem Sicherheitselement (2, 3), dadurch gekennzeichnet, dass das Sicherheitselement (2, 3) unter Verwendung eines Materials (M) erzeugt wird, das durch ein elektrisches Feld (E) oder ein magnetisches Feld optisch veränderbar ist.
19. Verfahren nach Absatz 18, dadurch gekennzeichnet, dass das optisch veränderbare Material (M) eine Vielzahl von Teilchen (8, 9) umfasst, die mittels eines elektrischen Felds (E) oder eines magnetischen Feldes in ihrer Lage und/oder Ausrichtung veränderbar sind.
20. Verfahren nach Absatz 19, dadurch gekennzeichnet, dass zur Erzeugung des optisch veränderbaren Materials (M) die Teilchen (8, 9) als Pigmente in eine Farbe, Tinte oder Toner eingebracht werden.
21. Verfahren nach einem der Absätze 18 bis 20, dadurch gekennzeichnet, dass als Sicherheitselement (3) auf das Sicherheitsdokument (1) unter Verwendung des optisch veränderbaren Materials (M) Informationen (3) aufgebracht werden.
22. Verfahren nach einem der Absätze 18 bis 21, dadurch gekennzeichnet, dass als Sicherheitselement (2) auf das Sicherheitsdokument (1) unter Verwendung des optisch veränderbaren Materials (M) eine Sicherheitsschicht (2) aufgebracht wird.
23. Verfahren nach einem der Absätze 19 bis 22, dadurch gekennzeichnet, dass zur Erzeugung des optisch veränderbaren Materials (M) die Teilchen (8, 9) in Mikrokapseln (7) eingeschlossen in ein Bindemittel (6) eingebracht werden, wobei die Mikrokapseln (7) mittels eines Quellungsmittels in einen aufgequollenen Zustand gebracht werden, in welchem die Teilchen (8, 9) in den Mikrokapseln (7) beweglich gelagert sind, und so das optisch veränderbaren Material (M) in einen aktivierten Zustand gebracht wird.
24. Verfahren nach. Absatz 23, dadurch gekennzeichnet, dass die Sicherheitsschicht (2) und/oder die Informationen (3) mittels eines bereits aktivierten, optisch veränderbaren Materials (M) auf dem Sicherheitsdokument (1) erzeugt werden.
25. Verfahren nach Absatz 23, dadurch gekennzeichnet, dass die Sicherheitsschicht und/oder die Informationen mittels eines nichtaktivierten, optisch veränderbaren Materials auf dem Sicherheitsdokument erzeugt werden, und das Sicherheitsdokument mit einem Quellungsmittel zur Aktivierung des optisch veränderbaren Materials behandelt wird.
26. Verfahren nach Absatz 23, dadurch gekennzeichnet, dass die Sicherheitsschicht und/oder die Informationen auf dem Sicherheitsdokument mittels eines Materials erzeugt werden, welche das nichtaktivierte, optisch veränderbare Material sowie Mikrokapseln umfasst, die das zur Aktivierung benötigte Quellungsmittel enthalten, und eine Aktivierung des optisch veränderbaren Materials auf dem Dokument durch eine Zerstörung der Mikrokapseln mit dem Quellungsmittel erfolgt.
27. Prüfverfahren zur Prüfung eines Sicherheitsdokuments nach einem der Absätze 1 bis 17, dadurch gekennzeichnet, dass das Sicherheitsdokument (1) einem elektrischen Feld (E) oder einem magnetischen Feld ausgesetzt wird.
28. Prüfverfahren nach Absatz 27, dadurch gekennzeichnet, dass ein externes elektrisches oder magnetisches Feld verwendet wird.
29. Prüfverfahren nach Absatz 27, dadurch gekennzeichnet, dass zur Erzeugung des elektrischen Felds im Sicherheitsdokument befindliche elektrisch leitfähige Schichten an eine Spannungsquelle angeschlossen werden.
30. Prüfverfahren nach einem der Absätze 27 bis 29, dadurch gekennzeichnet, dass das elektrische oder magnetische Feld strukturiert ist.

## Patentansprüche

1. Sicherheitsdokument (1) mit einem Sicherheitselement (2, 3),
welches zumindest teilweise aus einem Material (M) besteht, das durch ein elektrisches Feld (E) oder ein magnetisches Feld optisch veränderbar ist, **dadurch gekennzeichnet, dass** das Sicherheitsdokument zum Zweck seiner Überprüfung eingerichtet ist, eine optische Veränderung des Materials (M) durch Einbringen des Sicherheitsdokuments in ein elektrisches oder magnetisches Feld zu bewirken, ohne dass dafür auf dem Dokument adressierende Leitungen angelegt sind.

2. Sicherheitsdokument nach Anspruch 1, **dadurch gekennzeichnet, dass** das optisch veränderbare Material (M) eine Vielzahl von Teilchen (8, 9) umfasst, die mittels eines elektrischen Felds (E)) oder eines magnetischen Feldes in ihrer Lage und/oder Ausrichtung veränderbar sind.

3. Sicherheitsdokument nach Anspruch 1 oder 2, **dadurch gekennzeichnet, dass** das Sicherheitselement (3) auf das Sicherheitsdokument (1) aufgebrachte Informationen (3) umfasst, die zumindest teilweise aus dem optisch veränderbaren Material (M) bestehen.

4. Sicherheitsdokument nach einem der Ansprüche 1 bis 3, **dadurch gekennzeichnet, dass** das Sicherheitselement (2) eine Sicherheitsschicht (2) umfasst, die zumindest teilweise aus dem optisch veränderbaren Material (M) besteht

5. Sicherheitsdokument nach Anspruch 4, **dadurch gekennzeichnet, dass** die Sicherheitsschicht eine Struktur aufweist

6. Sicherheitsdokument nach einem der Ansprüche 3 bis 5, **dadurch gekennzeichnet, dass** die Sicherheitsschicht (2) und/oder die optisch veränderbaren Informationen (3) in Abhängigkeit von einem elektrischen Feld (E) oder einem magnetischen Feld von einer bestimmten Ansichtsseite aus verschiedene Farben aufweisen.

7. Sicherheitsdokument nach einem der Ansprüche 3 bis 6, **dadurch gekennzeichnet, dass** die Sicherheitsschicht (2) und/oder die optisch veränderbaren Informationen (3) in Abhängigkeit von einem elektrischen Feld (E) durchsichtig oder undurchsichtig sind.

8. Sicherheitsdokument nach einem der Ansprüche 4 bis 7, **dadurch gekennzeichnet, dass** eine zu sichernde Information auf einer Sicherheitsschicht aufgebracht ist

9. Sicherheitsdokument nach einem der Ansprüche 4 bis 8, **dadurch gekennzeichnet, dass** eine Sicherheitsschicht (2) eine auf das Sicherheitsdokument (1) aufgebrachte Information (10) abdeckt

10. Sicherheitsdokument nach einem der Ansprüche 1 bis 9, **dadurch gekennzeichnet, dass** das Material durch Einstrahlung von Licht in einen Zustand verbringbar ist in dem es mittels eines elektrischen Felds optisch veränderbar ist

11. Sicherheitsdokument nach einem der Ansprüche 2 bis 10, **dadurch gekennzeichnet, dass** die Teilchen des optisch veränderbaren Materials in einer Substanz eingebettet sind, die bei Einstrahlung von Licht ein elektrisches Feld erzeugt

12. Sicherheitsdokument nach einem der Ansprüche 1 bis 11, **gekennzeichnet durch** eine Schicht, die bei Einstrahlung von Licht ein elektrisches Feld erzeugt

13. Sicherheitsdokument nach einem der Ansprüche 1 bis 12, **dadurch gekennzeichnet, dass** das optisch veränderbare Material durch organische Medien und/oder Wasser lösbar ist

14. Prüfverfahren, **dadurch gekennzeichnet, dass** ein Sicherheitsdokument (1) nach einem der Ansprüche 1 bis 13 zu Prüfungszwecken einem externen elektrischen Feld (E) oder einem magnetischen Feld ausgesetzt wird.

15. Prüfverfahren nach einem der Ansprüche 14, **dadurch gekennzeichnet, dass** das elektrische oder magnetische Feld strukturiert ist
